# EUROPEAN PATENT APPLICATION

(11) **EP 4 477 914 A1**
(43) Date of publication of application: **18.12.2024**
(21) Application number: 23194221.0
(22) Date of filing: 30.08.2023
(51) Int. Cl.: F16F 1/374, B62J 1/00, B62J 1/02, B62J 1/26

(54) **SHOCK-ABSORPTION MODULE FILLED WITH CUSHIONING PELLETS AND SADDLE COMBINED WITH THE SHOCK-ABSORPTION MODULE**

(30) Priority: 16.06.2023 TW 112206158 U
(71) Applicant: DDK Group Co., Ltd. Taiwan Branch, 40757 Taichung City (TW)
(72) Inventor: SUNG, YING-CHIAO, 40757 TAICHUNG CITY (TW)
(74) Representative: Canzler & Bergmeier Patentanwälte Partnerschaft mbB

(57) **Abstract**

A shock-absorption module (3, 3a, 3b) includes an exterior enclosure (30) formed with a hollow interior space (31) therein. The exterior enclosure (30) is made of elastic cushioning material. A plurality of cushioning pellets (4) are filled in the hollow interior space (31) of the exterior enclosure (30). Two opposite ends of an outside surface of the exterior enclosure (30) are respectively formed with a first force-bearing surface (32a) and a second force-bearing surface (32b). A saddle (100, 100a, 100b, 100c) is combined with at least one shock-absorption module (3, 3a, 3b) positioned between a positioning portion (11) of a base plate (1) of the saddle (100, 100a, 100b, 100c) and a support base (2), so that when a pressing force or vibration force is acting on the saddle (100, 100a, 100b, 100c), the exterior enclosure (30) provides an effect of shock absorption, and the cushioning pellets (4) also achieves an additional effect of cushioning.

## Description

### BACKGROUND OF THE INVENTION

### 1. Field of the Invention

The present invention relates to a shock-absorption device, and more particularly to a shock-absorption module filled with cushioning pellets, wherein the shock-absorption module is further combinable with a saddle to serve as a shock-absorption device.

### 2. The Related Arts

Cycling is now a popular exercise, and various accessories have been widely used and have been made professionalized. In the known designs for the structure of bicycle saddles, to protect a bicyclist from excessive shocks and vibrations, it is common to mount a shock-protection device or shock-absorption device on the bottom of a saddle.

To achieve an effect of shock protection or shock absorption, manufacturers have provided a shock-absorption assembly that is made of a rubber material or a plastic material to be mounted under the saddle to serve as a shock-absorption component. Such an assembly can be mounted in an easy way and is effective in overcoming the problem of pinching fingers, yet practically, it is imperfect in respect of the performance of shock absorption.

### SUMMARY OF THE INVENTION

In view of the drawbacks of the known bicycle saddle shock-absorption structure, the primary objective of the present invention is to provide a shock-absorption module that achieves an excellent effect of shock absorption, and such a shock-absorption module is combinable with a saddle to provide a bicycle saddle product that offers a bicyclist a bettered effect of shock absorption.

To achieve the above objective, the present invention provides a shock-absorption module which includes an exterior enclosure formed with a hollow interior space therein. The exterior enclosure is made of elastic cushioning material. A plurality of cushioning pellets are filled in the hollow interior space of the exterior enclosure. Two opposite ends of an outside surface of the exterior enclosure are respectively formed with a first force-bearing surface and a second force-bearing surface.

A saddle is combined with at least one shock-absorption module positioned between a positioning portion of a base plate of the saddle and a support base, so that when a pressing force or vibration force is acting on the saddle, the exterior enclosure provides an effect of shock absorption, and the cushioning pellets also achieves an additional effect of cushioning.

In a further embodiment of the present invention, a cushioning pellet containing space is formed between a base plate and an outer cover layer of the saddle. A plurality of cushioning pellets are filled in the cushioning pellet containing space. The plurality of cushioning pellets, the base plate and the outer cover layer in combination provide an excellent effect of shock absorption for the saddle.

In efficacy, the shock-absorption module of the present invention has an excellent effect of shock absorption. When a pressing force or vibration force is acting on a saddle combined with the shock-absorption module, an exterior enclosure of the shock-absorption module absorbs the pressing force or vibration force to achieve an elastic function. Simultaneously, the plurality of cushioning pellets contained in the exterior enclosure are acted upon by the deformation of the exterior enclosure to cause adjacent ones of the cushioning pellets to contact with each other and become compressed and deformed, so that an additional function of cushioning is generated simultaneously in combination with a shock absorption function achieved with the exterior enclosure

Preferably, the shock-absorption module is made in one of a spherical structure, a flat spherical structure, a cylindrical structure, a columnar structure, and a flat structure.

Preferably, the shock-absorption module is formed with a through hole portion, which is formed through the shock-absorption module and communicates with the first force-bearing surface and the second force-bearing surface.

Preferably, the cushioning pellets are made of a thermoplastic elastomer. Also, the hardness of the cushioning pellet may be selectively changed to achieve different elasticities.

Preferably, the cushioning pellets are made in a particle-like structure that is solid or hollow.

A technical solution adopted in the present invention will be further described with reference to embodiments provided below and the attached drawings.

### BRIEF DESCRIPTION OF THE DRAWINGS

FIG. 1 is a perspective view showing a first embodiment of the present invention;
FIG. 2 is a side elevational view showing the first embodiment of the present invention;
FIG. 3 is a rear view showing the first embodiment of the present invention;
FIG. 4 is a cross-sectional view taken along section A-A of FIG. 1;
FIG. 5 is a cross-sectional view showing a second embodiment of the present invention;
FIG. 6 is a cross-sectional view showing a third embodiment of the present invention;
FIG. 7 is a side elevational view showing a fourth embodiment of the present invention;
FIG. 8 is a cross-sectional view showing a fourth embodiment of the present invention; and
FIG. 9 is a cross-sectional view showing a fifth embodiment of the present invention.

### DETAILED DESCRIPTION OF THE PREFERRED EMBODIMENTS

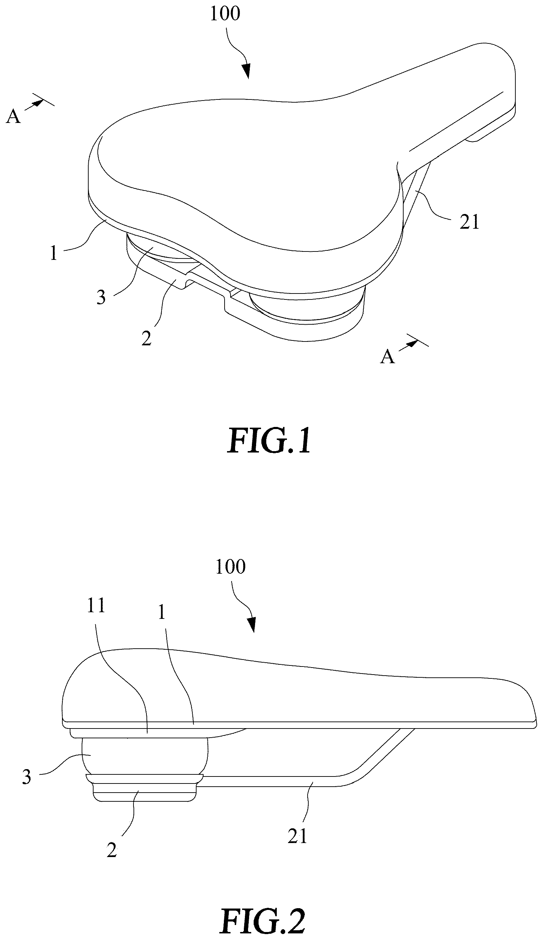

Referring jointly to FIGS. 1-3, which are respectively a rear-side perspective view, a side elevational view, and a rear view of a first embodiment of the present invention, as shown in the drawings, a bike saddle 100 comprises a base plate 1 having a bottom on which a positioning portion 11 is located at each of two lateral side portions of a rear end of the base plate 1. A support base 2 is arranged under the bottom of the base plate 1 and corresponds to the positioning portions 11. A bracket 21 has a front end connected to a front end of the bottom of the base plate 1, and the bracket 21 has a rear end coupled to the support base 2. The bracket 21 connects the saddle 100 to a vertical pole (not shown) of a bicycle.

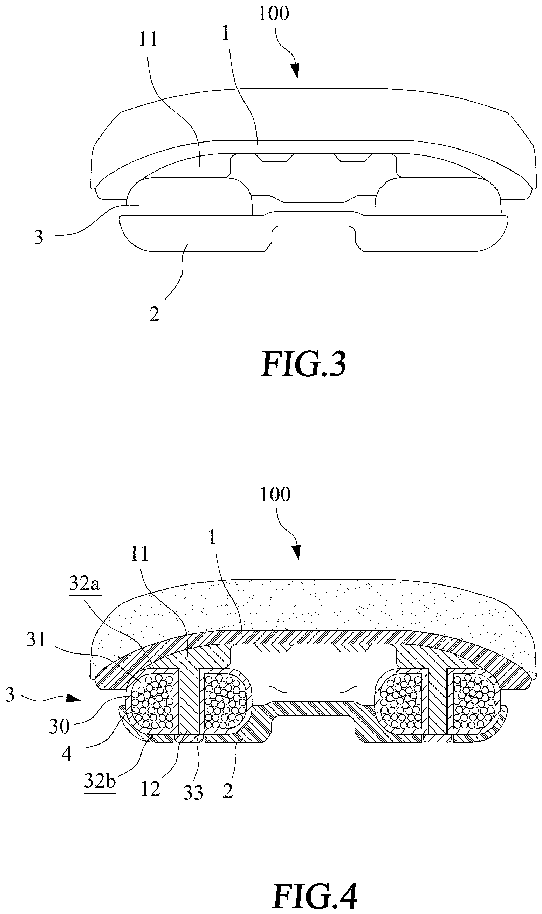

A pair of shock-absorption modules 3 are connected between the positioning portions 11 at the two lateral side portions of the rear end of the bottom of the base plate 1 and the support base 2. FIG. 4 shows a cross-sectional view taken along section A-A of FIG. 1. As shown in the drawing, each of the shock-absorption modules 3 according to the present invention comprises an exterior enclosure 30 formed with a hollow interior space 31 therein. The exterior enclosure 30 is made of an elastic material, which can be of a spherical structure, a flat spherical structure, a cylindrical structure, a columnar structure, or a flat structure. Two opposite ends of the outside surface of the exterior enclosure 30 are respectively defined as a first force-bearing surface 32a and a second force-bearing surface 32b to be respectively abutted against the positioning portion 11 of the base plate 1 and the support base 2.

The hollow interior space 31 of the exterior enclosure 30 is filled with a plurality of cushioning pellets 4. The cushioning pellets 4 are made of an elastic material. Preferably, the cushioning pellets 4 are made of thermoplastic elastomer (TPE), or other materials that are elastic. Preferably, the hardness of the cushioning pellet may be selectively changed to achieve different elasticities. In fabrication and shaping, the cushioning pellets 4 can be made in a solid or hollow particle-like structure.

When a sitting surface of the saddle 100 receives a pressing force or a vibration force in a vertical direction acting thereon, the pressing force is transmitted through the positioning portion 11 of the base plate 1 to the exterior enclosure 30 of the shock-absorption module 3. The exterior enclosure 30 is then compressed by the pressing force or vibration force to cause wall of the exterior enclosure 30 to deform, so that the exterior enclosure 30 absorbs the pressing force or vibration force to achieve an effect of elastic shock absorption. Also, the plurality of cushioning pellets 4 contained in the exterior enclosure 30 are acted upon by the deformation of the exterior enclosure 30 to cause adjacent ones of the cushioning pellets 4 to contact with each other and become compressed and deformed, so as to achieve an additional effect of cushioning simultaneously in combination with the effect of shock absorption provided by the wall of the exterior enclosure 30.

In a preferred embodiment, the hollow interior space 31 of the exterior enclosure 30 is made in an airtightly sealed manner. Further, the exterior enclosure 30 comprises a through hole portion 33. The through hole portion 33 is formed through a central portion of the exterior enclosure 30 and communicates between the first force-bearing surface 32a and the second force-bearing surface 32b, while maintaining the airtightness of the hollow interior space 31 of the exterior enclosure 30.

The positioning portions 11 of the base plate 1 may be each formed with a positioning pillar 12 extending downward. The positioning pillar 12 respectively extends through the through hole portions 33 of the exterior enclosure 30 and, a conventional fastener can be applied to securely position the shock-absorption module 3 between the positioning portions 11 of the base plate 1 and the support base 2. The positioning pillar 12 can be replaced by other positioning element (such as bolt) to achieve the same purpose of fastening and positioning.

The hollow interior space 31 of the exterior enclosure 30, in the entirety thereof, may be filled up a relatively large number of cushioning pellets 4 or it may be filled with a relatively small number of cushioning pellets 4, and as such, different effects of elastic cushioning may be provided. Further, the cushioning pellets 4 filled in the hollow interior space 31 of the exterior enclosure 30 can be made with different colors or different sizes to enhance a commercial effect or function.

In practical applications, in addition to being used in a bicycle saddle, the shock-absorption module 3 of the present invention can also be used in other fields of applications (such as seat cushions or saddles of motorcycles, electrical bicycle, electrical vehicles, and automobiles, and the likes).

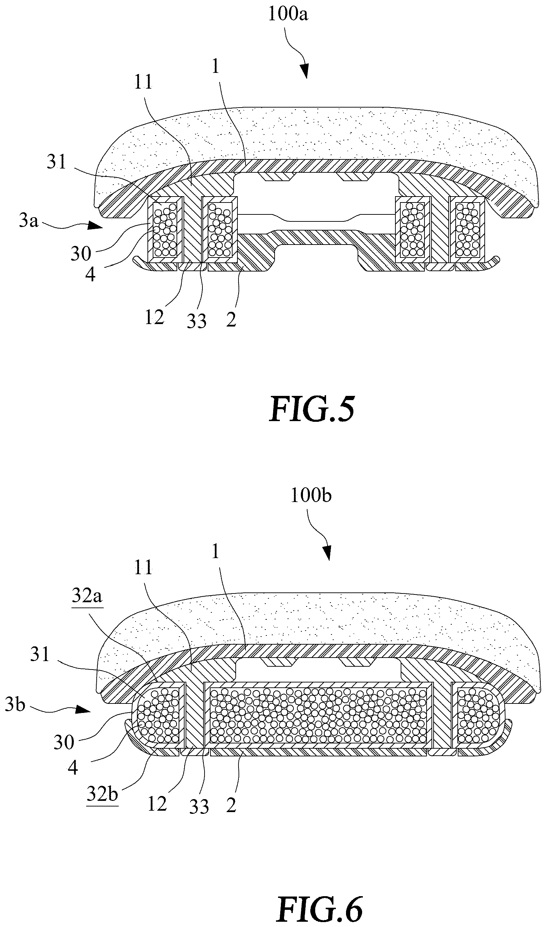

In the previous embodiment, the shock-absorption module 3 is made to have a spherical structure, and they can alternatively be made in various other structures. For example, FIG. 5 shows a cross-sectional view of a second embodiment of a saddle 100a of the present invention, and in the embodiment, the constituent components are generally similar to those of the first embodiment, and for consistency purposes, similar components are designated with similar reference signs. In the instant embodiment, the shock-absorption module 3a is made in a cylindrical structure or a columnar structure having a through hole portion formed in the middle thereof and having a top surface and a bottom surface respectively supported on the base plate 1 and the support base 2 to be located therebetween.

FIG. 6 shows a cross-sectional view of a third embodiment of a saddle 100b of the present invention. In the instant embodiment, the shock-absorption module 3b is made in a structure of a flat form having a top surface and a bottom surface respectively supported on the base plate 1 and the support base 2 to be located therebetween. When a sitting surface of the saddle 100b receives a pressing force or a vibration force in a vertical direction acting thereon, the exterior enclosure 30 is then compressed by the pressing force or vibration force to cause wall of the exterior enclosure 30 to deform, so that the shock-absorption module 3b absorbs the pressing force or vibration force to achieve an effect of elastic shock absorption. Also, the plurality of cushioning pellets 4 contained in the hollow interior space 31 of the shock-absorption module 3b are acted upon by the deformation of the shock-absorption module 3b to cause adjacent ones of the cushioning pellets 4 to contact with each other and become compressed and deformed so as to achieve an additional effect of cushioning simultaneously in combination with the effect of shock absorption provided by the shock-absorption module 3b.

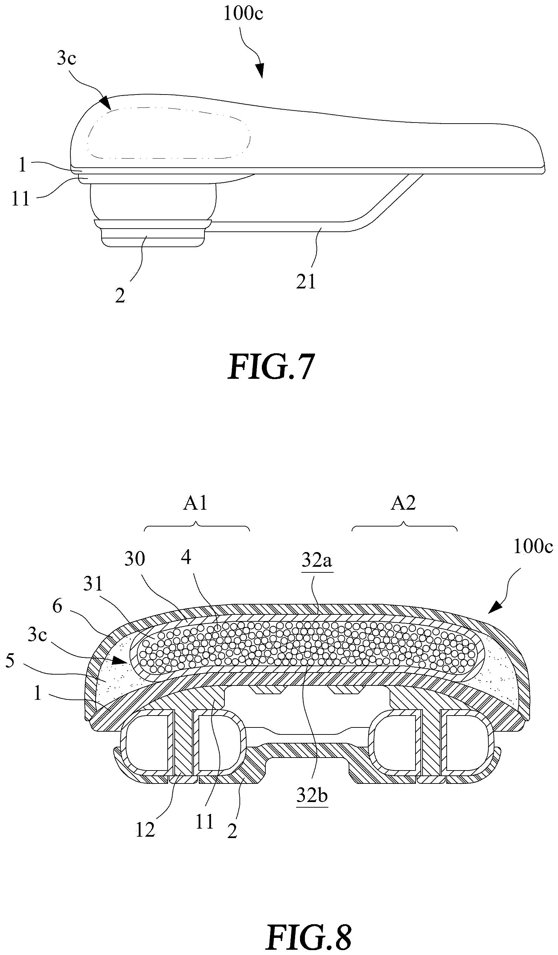

Referring to FIGS. 7 and 8, which are respectively a side elevational view and a cross-sectional view of a fourth embodiment of the saddle 100c of the present invention. As shown, the saddle 100c includes a saddle body 5 formed on a base plate 1 and an outer cover layer 6 overlaying the top surface of the saddle body 5.

A shock-absorption module 3c made in a structure of a flat form is mounted in the saddle body 5 and between the base plate 1 and the outer cover layer 6. Preferably, the shock-absorption modules 3c is arranged at a location covering the ischiatic pressure bearing zones A1, A2 defined by the saddle 100c. The ischiatic pressure bearing zones A1, A2 correspond to the ischiums of a cyclist of the saddle 100c. Alternatively, a pair of shock-absorption modules 3c may be respectively arranged at locations corresponding to the ischiatic pressure bearing zones A1, A2 defined by the saddle 100c.

Similarly, the shock-absorption module 3c comprises an exterior enclosure 30 made of an elastic material and formed with a hollow interior space 31 therein. Two opposite ends of an outside surface of the exterior enclosure 30 are respectively defined as a first force-bearing surface 32a abutted against the outer cover layer 6 and a second force-bearing surface 32b abutted against the base plate 1. A plurality of cushioning pellets 4 are filled in the hollow interior space 31 of the shock-absorption module 3c.

When a top surface of the outer cover layer 6 receives a pressing force or a vibration force in a vertical direction acting thereon, the exterior enclosure 30 of the shock-absorption module 3c is then compressed by the pressing force or vibration force to cause wall of the exterior enclosure 30 to deform, so that the shock-absorption module 3c absorbs the pressing force or vibration force to achieve an effect of elastic shock absorption. Also, the plurality of cushioning pellets 4 contained in the shock-absorption module 3c are acted upon by the deformation of the shock-absorption module 3c to cause adjacent ones of the cushioning pellets 4 to contact with each other and become compressed and deformed, so as to achieve an additional effect of cushioning simultaneously in combination with the effect of shock absorption provided by the shock-absorption module 3c.

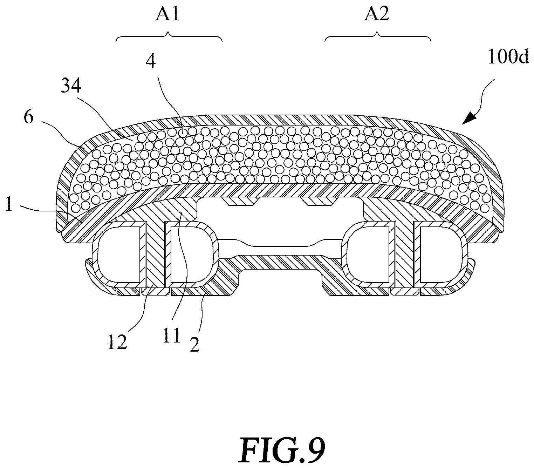

Referring to FIG 9, which is a cross-sectional view of a fifth embodiment of a saddle 100d of the present invention. In the instant embodiment, a cushioning pellet containing space 34 is formed between a base plate 1 and an outer cover layer 6. A plurality of cushioning pellets 4 made of thermoplastic elastomer are filled in the cushioning pellet containing space 34. The plurality of cushioning pellets 4, the base plate 1 and the outer cover layer 6 in combination provide an excellent effect of shock absorption for the saddle 100d.

Preferably, the cushioning pellet containing space 34 is formed to cover the ischiatic pressure bearing zones A1, A2 defined by the saddle 100d. Alternatively, a pair of cushioning pellet containing spaces 34 may be respectively formed at locations corresponding to the ischiatic pressure bearing zones A1, A2 defined by the saddle 100d.

The embodiments described above are provided only for illustrating the present invention and are not intended to limit the scope of the present invention. Equivalent modifications and substitutes that do not depart from the spirits of the present invention are considered failing in the scope of patent protection of the present invention that is defined in the following claims.

## Claims

1. A shock-absorption module (3, 3a, 3b), comprising:
an exterior enclosure (30) made of an elastic material and formed with a hollow interior space (31) therein, two opposite ends of an outside surface of the exterior enclosure (30) being respectively defined as a first force-bearing surface (32a) and a second force-bearing surface (32b),
**characterized in that** a plurality of cushioning pellets (4) made of thermoplastic elastomer are filled in the hollow interior space (31) of the exterior enclosure (30).

2. The shock-absorption module (3, 3a, 3b) according to claim 1, **characterized in that** the shock-absorption module (3, 3a, 3b) is made in one of a spherical structure, a flat spherical structure, a cylindrical structure, a columnar structure, and a flat structure.

3. The shock-absorption module (3, 3a, 3b) according to claim 1, **characterized in that** the exterior enclosure (30) is formed with a through hole portion (33), which is formed through a central portion of the exterior enclosure (30) and communicates with the first force-bearing surface (32a) and the second force-bearing surface (32b).

4. A saddle (100, 100a, 100b, 100c), comprising:
a base plate (1) having a bottom formed with at least one positioning portion (11);
a support base (2) arranged under the bottom of the base plate (1) and
corresponds to the at least one positioning portion (11);
at least one shock-absorption module (3, 3a, 3b, 3c) positioned between the at least one positioning portion (11) of the base plate (1) and the support base (2);
**characterized in that**:
the at least one shock-absorption module (3, 3a, 3b, 3c) is made of an elastic material, formed with a hollow interior space (31) therein, two opposite ends of an outside surface of the at least one shock-absorption module (3, 3a, 3b, 3c) being respectively formed with a first force-bearing surface (32a) abutted against the at least one positioning portion (11) of the base plate (1) and a second force-bearing surface (32b) abutted against the support base (2); and
a plurality of cushioning pellets (4) made of thermoplastic elastomer are filled in the hollow interior space (31) of the at least one shock-absorption module (3, 3a, 3b, 3c).

5. The saddle (100, 100a, 100b, 100c) according to claim 4, **characterized in that** the at least one shock-absorption module (3, 3a, 3b, 3c) is made in one of a spherical structure, a flat spherical structure, a cylindrical structure, a columnar structure, and a flat structure.

6. The saddle (100, 100a, 100b, 100c) according to claim 4, **characterized in that** the at least one shock-absorption module (3, 3a, 3b, 3c) is formed with a through hole portion (33) formed through the at least one shock-absorption module (3, 3a, 3b, 3c) and communicates with the first force-bearing surface (32a) and the second force-bearing surface (32b); the at least one positioning portion (11) of the base plate (1) is formed with a positioning pillar (12) extending downward, the positioning pillar (12) extending through the through hole portion (33) of the at least one shock-absorption module (3, 3a, 3b, 3c) to position the at least one shock-absorption module (3, 3a, 3b, 3c) between the at least one positioning portion (11) of the base plate (1) and the support base (2).

7. A saddle (100d), comprising:
a base plate (1);
an outer cover layer (6);
**characterized in that**:
a cushioning pellet containing space (34) is formed between the base plate (1) and the outer cover layer (6); and
a plurality of cushioning pellets (4) made of thermoplastic elastomer are filled in the cushioning pellet containing space (34).

8. The saddle (100d) according to claim 7, **characterized in that** the cushioning pellet containing space (34) is at least formed at a location corresponding to ischiatic pressure bearing zones (A1, A2) defined by the saddle (100d).

9. The saddle (100d) according to claim 7, **characterized in that** the plurality of cushioning pellets (4) are contained in a hollow interior space (31) of an exterior enclosure (30) made of elastic material, two opposite ends of the an outside surface of the exterior enclosure (30) being respectively defined as a first force-bearing surface (32a) abutted against the outer cover layer (6) and a second force-bearing surface abutted against the base plate (1).

10. The saddle (100d) according to claim 9, **characterized in that** the exterior enclosure (30) is made in one of a spherical structure, a flat spherical structure, a cylindrical structure, a columnar structure, and a flat structure.
